# EUROPEAN PATENT SPECIFICATION

(11) **EP 3 748 791 B1**
(45) Date of publication and mention of the grant of the patent: **28.08.2024**
(21) Application number: 18903084.4
(22) Date of filing: 30.01.2018
(51) Int. Cl.: H02B 1/21, H02B 1/36, H02B 1/56

(54) **VERTICAL BUS LINE SUPPORT DEVICE**
VERTIKALE BUSLEITUNGSSTÜTZVORRICHTUNG
DISPOSITIF DE SUPPORT DE LIGNES DE BUS VERTICALES

(43) Date of publication of application: 09.12.2020
(73) Proprietor: Mitsubishi Electric Corporation, Tokyo 100-8310 (JP)
(72) Inventor: HANADA, Masaki, Tokyo 100-8310 (JP)
(74) Representative: Witte, Weller & Partner Patentanwälte mbB
(86) International application number: PCT/JP2018/002946
(87) International publication number: WO 2019/150426

(56) References cited:
- IN-A- 838 MU2 013
- JP-A- H09 322 322
- JP-A- S5 588 509
- JP-A- S60 106 306
- JP-A- S60 106 306
- JP-U- S5 863 816
- JP-U- S5 863 816
- JP-Y2- H0 721 047
- JP-Y2- H0 721 047
- JP-Y2- S 589 477
- US-A1- 2006 120 027

## Description

### TECHNICAL FIELD

The present invention relates to a supporting device for vertical buses arranged in a housing of a switchboard.

### BACKGROUND ART

Examples of switchboards used in power receiving/distributing facilities include ones that are called switchgears or control gears in which a switching device is housed in a metallic housing. A large number of motors are used to operate pumps, machinery, and the like in plants such as factories, waterworks and sewage works, and power plants. In order to perform centralized management in a single place for controlling, protecting, measuring, and monitoring the group of these motors, control centers (a type of control gear) housing a plurality of functional units obtained by unitizing control devices have been widely used in the plants. In a control center, power is fed to each functional unit via a plurality of horizontal buses and a plurality of vertical buses provided in the control center. The horizontal buses supply power from a higher-order power supply source, and the vertical buses connected to the horizontal buses cause power to branch into each functional unit. Contactors provided to the functional units are connected to the vertical buses. In general, a plurality of vertical buses in a control center are fixed to a housing so as to be kept at regular intervals using vertical bus supports made of an insulating material, in order to ensure an insulation distance between different phases at the time of short-circuiting. However, if a small animal enters the control center and comes into contact with vertical buses with different phases at the same time, short-circuiting may occur.

The following configurations for avoiding such short-circuiting have been known: configurations in which the entireties of vertical buses extending in an up-down direction are held, from the front side and the rear side thereof, between protective covers having partition walls for insulating the vertical buses from each other, and the two front-side and rear-side protective covers are connected and fixed to each other by means of connection portions which are formed at the distal ends of the partition walls of the protective covers so as to face each other, see, for example, Japanese Examined Utility Model No. 7-21047).

Document JP S 5863816 U shows grooves being provided on the front side and the upper and lower sides on the front side of bus bars of a plurality of bus bar holders which clamp the vertical bus bar of the center at an appropriate interval and fix them to the frame, and curved between the upper and lower bus bar holder grooves and a flexible insulating plate forming a vertical surface fixed to the bus bar holder on the front surface and the rear surface of the bus bar, wherein the insulating plate has an opening for inserting a disconnecting contact of each unit accommodated in the control center. An interphase barrier of the vertical insulation piece for phase insulation of the busbar is divided in the vertical direction by the insulation board on the front side and the back side of the busbar.
Document JP S 60106306 A shows a vertical body being provided with a plurality of vertical buses located at an anvil, and the vertical bus is an L-shaped cross section having an intermediate portion parallel to the front of the box and legs perpendicular to the intermediate portion. Alternatively, the control center has a two-character cross section, and the vertical bus legs are configured to be plug-in connected to a plurality of control units stacked and housed in a box body. The insulating supports are sandwiched between two front and rear insulating supports arranged at intervals in the direction, and each of the insulating supports forms a bus groove for receiving at least a leg of the vertical bus bar and one wall of the bus groove. An intermediate projection which abuts on and compresses the middle portion of the bus bar, and a side wall which forms the other wall of the bus bar groove and extends farther than the middle portion of the vertical bus bar, is further provided on the back surface of each of the two insulating supports. Before and after Insulating support device of the vertical generatrices of the control center, characterized in that it comprises a linked support fitting to clamp. (2) The rectangular bus bar superimposed on the middle portion of the vertical bus bar is restricted from moving in the left-right direction by the vertical bus leg portion and the side protrusion of the insulating support, and is under compression by the intermediate protrusion of the insulating support.
Document US 2006/120027 A1 shows a method and modular insulation system for an electrical equipment enclosure having multi-phase bus bars and a mounting base for mounting electrical equipment. The insulation system comprises a plurality of components including a plurality of side isolation barriers with each barrier defining at least one slot proximate one edge of the barrier and having at least one tab along another edge of the barrier. A side barrier adapter is configured to engage the isolation barrier and to engage the mounting base. An inner isolation barrier is configured to isolate at least two of the vertical bus bars and couple to the mounting base. A vertical bus rearwall defining a plurality of slots proximate at least two edges of the cover is fastened to the inner isolation barrier. A plurality of corner connectors is configured to engage one of the cover slots and the side isolation barrier slots. Document IN 838 MU 2013 A shows an insulated barrier assembly that includes a plurality of bus bar supports facilitating support to a plurality of vertical bus bars by providing entire encapsulation thereof. The insulated barrier assembly includes a bus cover having a plurality of knock outs, a plurality of louvers, a plurality of holes, a plurality of ridges, a plurality of ribs and at least one hexagonal platform. Each of the knock outs is having a bridge formed by a slit located around an entire periphery thereof. The knock outs configured to form a window therein. The window facilitates positioning of a plurality of bus bar fixed contacts therein. The ridge acts as a locator for fixing the bus cover onto the bus bar support. The louvers facilitate natural ventilation of heat from the vertical bus bars thereby reducing temperature thereof. The hexagonal platform adds rigidness to the bus cover.
Document JPS589477Y shows another vertical bus supporting device comprising two insulating support bodies clamped together by two metal pieces and comprising insulating interphase barriers.

### SUMMARY OF THE INVENTION

### PROBLEMS TO BE SOLVED BY THE INVENTION

In the above-described Japanese Examined Utility Model No. 7-21047, since the vertical buses are insulated from each other by the protective covers over the entireties of the vertical buses, short-circuiting due to contact with a small animal is inhibited. However, since the protective covers have sizes that range over the entireties of the vertical buses, a problem arises in that, whenever necessary, protective covers with required lengths have to be produced or the lengths of the protective covers have to be adjusted through additional machining, according to the lengths of the vertical buses disposed. In addition, since the protective covers are large members extending over the entireties of the vertical buses, a problem arises in that workability is poor in connecting the connection portions which are formed on the partition walls of the two holding protective covers so as to face each other, and the connection portions are not easily made with desired dimensional accuracy.

### SOLUTION TO THE PROBLEMS

A vertical bus supporting device according to claim 1.

### EFFECT OF THE INVENTION

The vertical bus supporting device according to the present invention allows the vertical bus protective covers to be easily mounted to the vertical bus supports and to be easily mounted also to vertical buses having different lengths.

### BRIEF DESCRIPTION OF THE DRAWINGS

[FIG. 1] FIG. 1 is a perspective view showing the external appearance of a control center according to embodiment 1 of the present invention.
[FIG. 2] FIG. 2 is a sectional view showing a schematic configuration of the control center according to embodiment 1 of the present invention.
[FIG. 3] FIG. 3 is a perspective view schematically showing a vertical bus supporting device according to embodiment 1 of the present invention.
[FIG. 4] FIG. 4 is an exploded perspective view showing a schematic configuration of the vertical bus supporting device according to embodiment 1 of the present invention.
[FIG. 5] FIG. 5 is a sectional view showing the schematic configuration of the vertical bus supporting device according to embodiment 1 of the present invention.
[FIG. 6] FIG. 6 is a perspective view showing a schematic configuration of a rear-surface vertical bus support according to embodiment 1 of the present invention.
[FIG. 7] FIG. 7 is a perspective view showing a schematic configuration of a front-surface vertical bus support according to embodiment 1 of the present invention.
[FIG. 8] FIG. 8 is a perspective view showing a schematic configuration around an area in which a vertical bus protective cover and the front-surface vertical bus support are fitted to each other, according to embodiment 1 of the present invention.
[FIG. 9] FIG. 9 is a sectional view showing the schematic configuration around the area in which the vertical bus protective cover and the front-surface vertical bus support are fitted to each other, according to embodiment 1 of the present invention.
[FIG. 10] FIG. 10 is a perspective view showing a schematic configuration of the vertical bus protective cover according to embodiment 1 of the present invention.
[FIG. 11] FIG. 11 is a perspective view schematically illustrating connections between vertical buses and horizontal buses, according to embodiment 1 of the present invention.
[FIG. 12] FIG. 12 is a sectional view schematically illustrating the connections between the vertical buses and the horizontal buses, according to embodiment 1 of the present invention.
[FIG. 13] FIG. 13 is a perspective view showing a schematic configuration of a vertical bus protective cover according to embodiment 2 of the present invention.
[FIG. 14] FIG. 14 is a perspective view showing a schematic configuration of a vertical bus protective cover according to embodiment 3 of the present invention.
[FIG. 15] FIG. 15 is a perspective view showing a schematic configuration of another vertical bus protective cover according to embodiment 3 of the present invention.

### DESCRIPTION OF EMBODIMENTS

### Embodiment 1

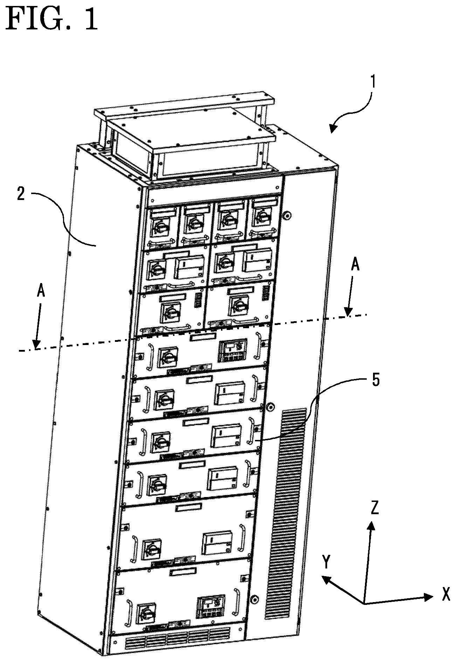

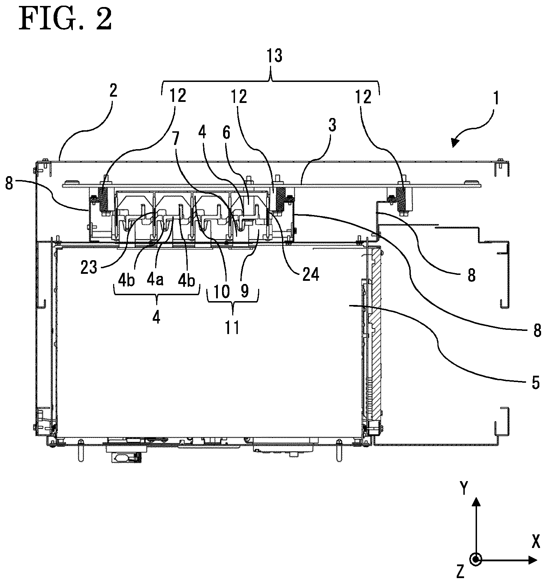

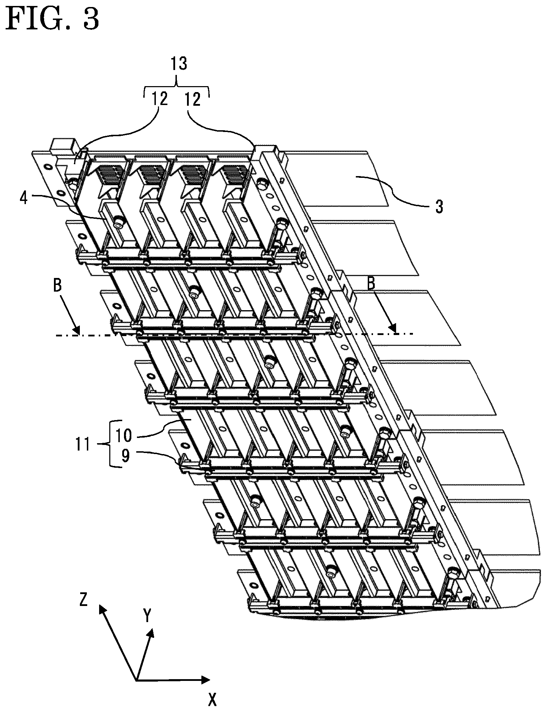

A schematic configuration of embodiment 1 of the present invention will be described. FIG. 1 is a perspective view showing the external appearance of a control center 1. FIG. 2 is a sectional view taken along the alternate long and short dash line A-A in FIG. 1. FIG. 3 is a perspective view schematically showing the inside of a housing 2 of the control center 1 excluding functional units 5. In an X-Z plane in FIG. 3, a front side from which vertical buses 4 can be seen is defined as the front-surface side of a vertical bus supporting device 11, and a rear side on which the vertical buses 4 are connected to horizontal buses 3 is defined as the rear-surface side of the vertical bus supporting device 11.

The control center 1 includes, in the housing 2 thereof shown in FIG. 1, the horizontal buses 3, the vertical buses 4, and the functional units 5 shown in FIG. 2. Power is fed to the functional units 5 via the horizontal buses 3 and the vertical buses 4. The vertical buses 4 extend in the Z direction and are arranged in a row at regular intervals in the X direction. The arrangement of the vertical buses 4 in the present embodiment is of a three-phase four-wire type with the number of the vertical buses 4 being four. Currents with different phases flow to the respective vertical buses 4. Each vertical bus 4 is, in a cross section thereof, composed of: a flat surface portion 4a at the center thereof; and end portions 4b formed by both side portions of the flat surface portion 4a being bent in directions opposite to each other. Thus, the cross section is Z-shaped. The purpose of this is to allow the vertical bus 4 to have such a strength as to be able to endure electromagnetic force generated owing to short-circuiting or the like. The horizontal buses 3 for supplying power to the vertical buses 4 extend in the X direction and are arranged in a row at regular intervals in the Z direction. The horizontal buses 3 and the vertical buses 4 are connected to each other via connection conductors 6, and the vertical buses 4 and the functional units 5 are connected to each other via contactors 7. The functional units 5 are obtained by unitizing control devices to perform centralized management in a single place for controlling, protecting, measuring, and monitoring a plurality of motors used in a plant. The vertical bus supporting device 11 is composed of vertical bus supporting tools 9 and vertical bus protective covers 10. The vertical buses 4 are fixed to fixation portions 8 disposed in the housing 2, by the vertical bus supporting tools 9. The vertical bus protective covers 10 are mounted to the vertical bus supporting tools 9, and the vertical buses 4 are insulated by partition walls (inter-vertical bus insulation portions 23 and vertical bus side-surface insulation portions 24) provided to the vertical bus protective covers 10. The horizontal buses 3 are fixed to the fixation portions 8 disposed in the housing 2, by a horizontal bus supporting device 13 composed of a plurality of horizontal bus supporting tools 12. The horizontal bus supporting tools 12 are made of, for example, an unsaturated polyester resin which is an insulating material. As shown in FIG. 3, the plurality of the horizontal buses 3 and the vertical buses 4 are disposed in the housing 2, and the vertical bus protective covers 10 are mounted between the plurality of respective vertical bus supporting tools 9.

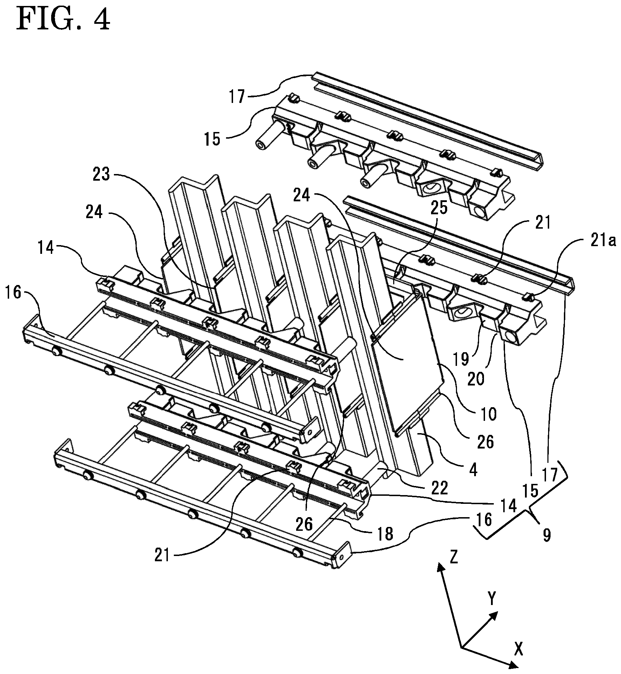

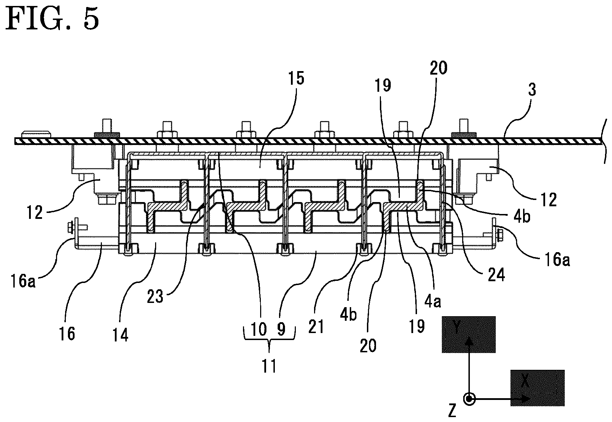

The configuration of the vertical bus supporting device 11 will be described. FIG. 4 is an exploded perspective view showing a schematic configuration of the vertical bus protective cover 10 and the vertical bus supporting tools 9. FIG. 5 is a sectional view taken along the alternate long and short dash line B-B in FIG. 3. In FIG. 4, the plurality of vertical buses 4 extending in the Z direction are retained by the plurality of vertical bus supporting tools 9 arranged in the Z direction. The vertical bus protective cover 10 including the inter-vertical bus insulation portions 23 and vertical bus side-surface insulation portions 24 which surround and insulate the vertical buses 4, is disposed between the vertical bus supporting tools 9. The intervals of the arrangement of the vertical bus supporting tools 9 are determined in consideration of such locations as not to interfere with the contactors 7 as well as not to cause any damages such as cracks in the vertical bus supporting tools 9, against electromagnetic repulsive force that is generated between the vertical buses 4 at the time of short-circuiting. Each vertical bus supporting tool 9 is composed of: a front-surface vertical bus support 14 and a rear-surface vertical bus support 15 disposed so as to hold therebetween the vertical buses 4 from the front-surface side and the rear-surface side; and a front-surface vertical bus supporting metal member 16 and a rear-surface vertical bus supporting metal member 17 disposed on the rear surfaces of these two respective vertical bus supports so as to couple the two vertical bus supports from the front-surface side and the rear-surface side. The front-surface vertical bus supporting metal member 16 and the rear-surface vertical bus supporting metal member 17 are coupled with each other using screws 18, and the vertical buses 4 are retained so as to be in close contact with the front-surface vertical bus support 14 and the rear-surface vertical bus support 15. The front-surface vertical bus supporting metal member 16 and the rear-surface vertical bus supporting metal member 17 are made of, for example, a rolled steel material for general structures (SS400 or the like) or a hot-rolled mild steel plate (SPHC or the like) which are metal plate materials. The vertical bus protective cover 10 is fixed by the two vertical bus supports, i.e., the front-surface vertical bus support 14 and the rear-surface vertical bus support 15. This fixation will be described later in details.

The vertical bus protective cover 10 is, for example, a resin molded article made of a thermoplastic resin (polycarbonate or the like) which is an insulating material. The size of the vertical bus protective cover 10 in the Z direction is determined according to the interval of the arrangement of the plurality of vertical bus supporting tools 9 such that the vertical bus protective cover 10 is located within the interval between the vertical bus supporting tools 9. The vertical bus protective cover 10 includes: inter-vertical bus insulation portions 23 as partition walls for insulating the vertical buses 4 from each other; and vertical bus side-surface insulation portions 24 as partition walls for insulating side surfaces of both sides of the plurality of vertical buses 4. The inter-vertical bus insulation portions 23 prevent short-circuiting between the vertical buses 4 from occurring owing to entry of a small animal or the like. The vertical bus side-surface insulation portions 24 prevent an operator or the like from accidentally coming into contact with any of the vertical buses 4, and prevent short-circuiting between any of the vertical buses 4 and an earth member such as a frame of the housing 2 from occurring owing to a small animal or the like. The vertical bus protective cover 10 further includes a rear-surface partition portion 25 coupling the plurality of inter-vertical bus insulation portions 23 and the plurality of vertical bus side-surface insulation portions 24 with each other and insulating the vertical buses 4 and the horizontal buses 3 from each other. On the upper side and the lower side of the inter-vertical bus insulation portions 23 and the vertical bus side-surface insulation portions 24, insertion portions 26 are formed so as to be fitted into engagement portions 21 formed on each of the front-surface vertical bus support 14 and the rear-surface vertical bus support 15. The insertion portions 26 are formed in shapes oriented to both the front surface direction and the rear surface direction so as to be fitted into the engagement portions 21. Here, each insertion portion 26 has a cylindrical shape, and each end portion thereof has a smooth hemispheric shape having no acute-angle portion. In a case where the vertical bus protective cover 10 is made of a thermoplastic resin, if the insertion portion 26 is formed in the cylindrical shape, a mold is uniformly filled with the resin when being filled with the resin, and thus defects in molding (a sink mark, a warp, and the like) are less likely to occur, whereby deterioration of the yield at the time of molding can be suppressed.

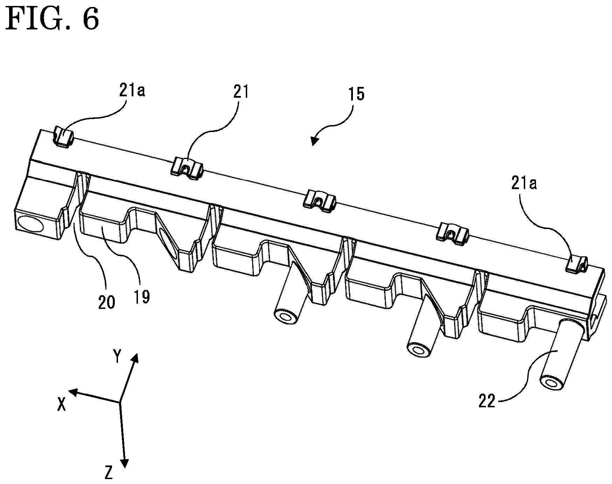

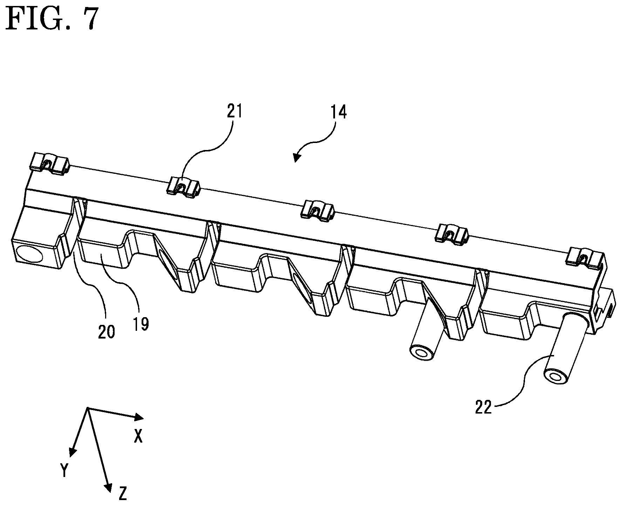

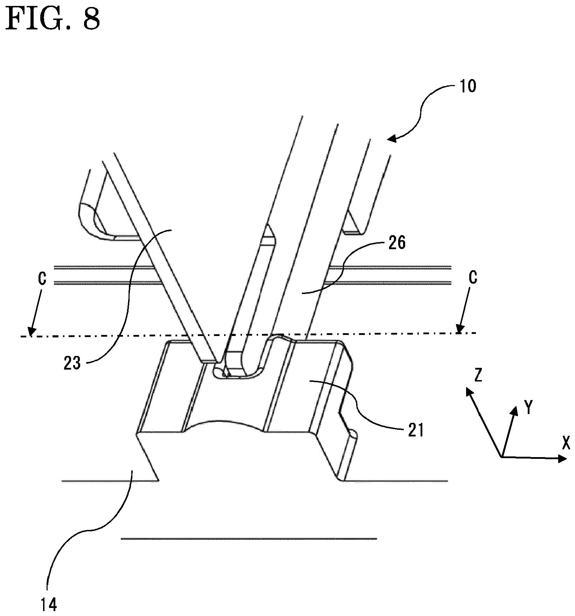

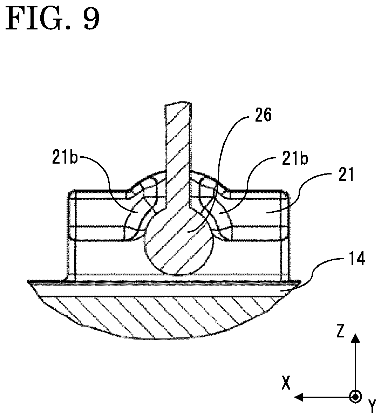

The front-surface vertical bus support 14 and the rear-surface vertical bus support 15 are made of, for example, an unsaturated polyester resin which is an insulating material. As shown in FIGS. 6 and 7, the front-surface vertical bus support 14 and the rear-surface vertical bus support 15 have, on surfaces thereof facing each other, screw penetration portions 22 into which the screws 18 penetrate. The screw penetration portions 22 are formed in tubular shapes in order to ensure creepage distances between the vertical buses 4 and the screws 18. In the configuration described above, the screw penetration portions 22 are formed separately on each of the front-surface vertical bus support 14 and the rear-surface vertical bus support 15. However, the screw penetration portions 22 may be collectively formed only on either of the front-surface vertical bus support 14 and the rear-surface vertical bus support 15. The vertical bus protective cover 10 is mounted and fixed by fitting the insertion portions 26 into the engagement portions 21 of each of the front-surface vertical bus support 14 and the rear-surface vertical bus support 15 when the vertical buses 4 are retained by being held between the two vertical bus supports, i.e., the front-surface vertical bus support 14 and the rear-surface vertical bus support 15. As shown in the enlarged view in FIG. 6, here, only engagement portions 21a formed at both end portions of the rear-surface vertical bus support 15 have half-cut shapes to prevent interference with the horizontal bus supporting tools 12. In addition, the front-surface vertical bus support 14 and the rear-surface vertical bus support 15 have, on both the upper surface side and the lower surface side thereof, the engagement portions 21 into which the insertion portions 26 of the vertical bus protective cover 10 are fitted. Each engagement portion 21 has a smooth substantially circular shape having no acute-angle portion and tapered in the depth direction, as seen in the X-Z plane (see enlarged views in FIGS. 8 and 9). As shown in FIG. 5, the front-surface vertical bus support 14 and the rear-surface vertical bus support 15 include: vertical bus pressing portions 19 which come into contact with the respective flat surface portions 4a of the vertical buses 4 from the front-surface side and the rear-surface side; and vertical bus insertion portions 20 into which the respective end portions 4b of the vertical buses 4 are inserted from the front-surface side and the rear-surface side. Attachment portions 16a are formed at both side portions in the X direction of the front-surface vertical bus supporting metal member 16 which is a part of the vertical bus supporting tool 9. The attachment portions 16a are fixed to the fixation portions 8 using screws.

Next, fixation of the vertical bus protective cover 10 will be described with reference to FIG. 8. FIG. 8 is a perspective view showing a schematic configuration around an area in which the vertical bus protective cover 10 and the front-surface vertical bus support 14 are fitted to each other. FIG. 9 is a sectional view taken along the alternate long and short dash line C-C in FIG. 8. Each engagement portion 21 and the corresponding insertion portion 26 are formed such that the surfaces thereof to face each other when fitted have no projections such as burrs and become smooth surfaces. Therefore, the engagement portion 21 and the insertion portion 26 are easily fixed to each other. In addition, dust can be inhibited from being generated by the engagement portion 21 and the insertion portion 26 rubbing against each other owing to vibrations at the times of transportation and operation of the control center 1, or the like. As shown in FIG. 9, if each end portion of the insertion portion 26 has a hemispheric shape and chamfered portions 21b are formed on the receiving side of the engagement portion 21, the end of the insertion portion 26 can be easily guided into the engagement portion 21, whereby the vertical bus supporting tool 9 can be easily assembled. If air gaps (for example, about 1 mm) are present between the engagement portions 21 and the insertion portions 26, even when electromagnetic repulsive force is applied to the vertical buses 4 owing to short-circuit current or the like, the electromagnetic repulsive force is received by the engagement portions 21, i.e., the front-surface vertical bus support 14 and the rear-surface vertical bus support 15. Thus, the vertical bus protective cover 10 is not influenced by the electromagnetic repulsive force, and the vertical bus protective cover 10 can be prevented from being damaged.

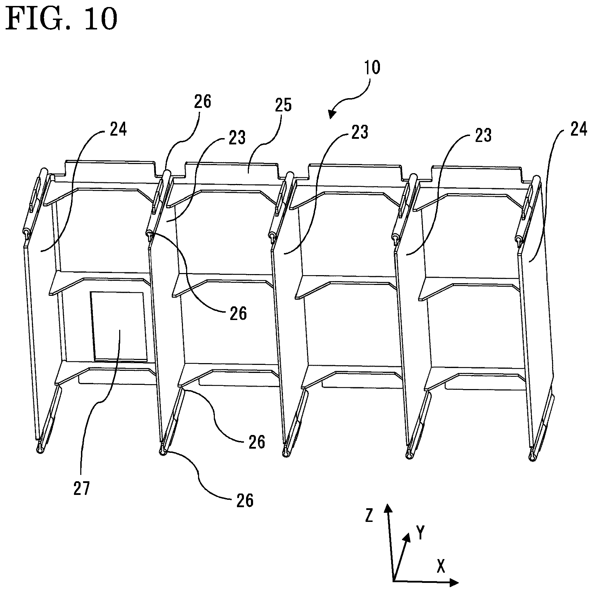

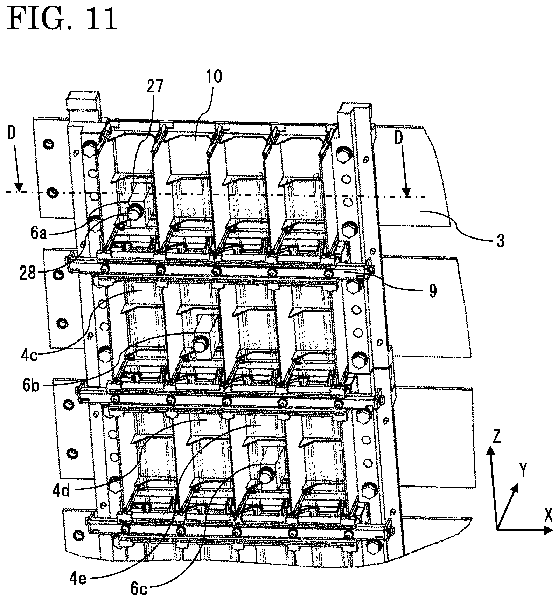

As shown in FIG. 10, a connection-conductor connection opening 27 is formed in the rear-surface partition portion 25 of the vertical bus protective cover 10. As shown in FIG. 11, a connection conductor 6a penetrates the connection-conductor connection opening 27 so as to connect a vertical bus 4c and the horizontal bus 3 to each other. In FIG. 11, only the outline of a part of each vertical bus 4 is indicated by alternate long and two short dashes lines in order to clearly illustrate the connection state.

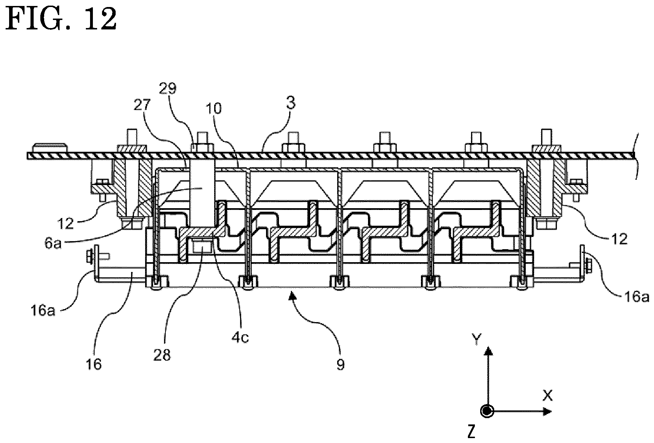

FIG. 12 is a sectional view taken along the alternate long and short dash line D-D in FIG. 11. FIG. 12 illustrates the connection between the horizontal bus 3 and the vertical bus 4c disposed at the left end in the X direction, on the upper stage in the Z direction in FIG. 11. Each connection conductor 6 is a rectangular parallelepiped having a size of about 25 mm × 60 mm × 45 mm, for example. The connection conductor 6 has a through hole through which a bolt is inserted. The connection conductor 6 is made of, for example, copper as a material. The vertical bus 4, the connection conductor 6, and the horizontal bus 3 are connected to each other by means of a bolt 28 and a press nut 29. The connection conductor 6a is provided to connect the horizontal bus 3 and the vertical bus 4c disposed at the left end, and a connection-conductor connection opening 27 is formed at a separate location according to the location of a connection conductor 6b or 6c that is to be connected to another vertical bus 4d or 4e shown in FIG. 11.

As described above, in the vertical bus supporting device 11, the vertical bus protective cover 10 including the partition walls allows the insertion portions 26 formed on the vertical bus protective cover 10 to be inserted and fitted into the engagement portions 21 of each of the front-surface vertical bus support 14 and the rear-surface vertical bus support 15. Thus, the vertical bus protective cover 10 can be easily mounted to the two vertical bus supports without using other components such as screws. In addition, an operation for assembling the vertical bus supporting device 11 is simplified, whereby the time for the operation can be reduced. In addition, the size of the vertical bus protective cover 10 in the longitudinal direction of the vertical buses 4 is determined according to the interval of the arrangement of the plurality of vertical bus supporting tools 9 such that the vertical bus protective cover 10 is located within the interval between the vertical bus supporting tools 9. Thus, even if a change is made to the lengths of the vertical buses 4, the mounting can be performed so as to flexibly adapt to the change. The vertical bus protective covers 10 can be easily mounted over the entireties in the longitudinal direction of the vertical buses 4, and thus the vertical buses 4 can be assuredly insulated from each other. In addition, since each insertion portion 26 is formed in the cylindrical shape, moldability is improved at the time of production of the vertical bus protective cover 10, whereby the yield can be improved. In addition, since the insertion portions 26 and the engagement portions 21 each have a smooth surface having no acute-angle portion, dust assumed to be generated owing to vibrations at the times of transportation and operation of the control center 1 can be inhibited from being generated.

Although the shapes of all the insertion portions 26 are the same with one another, the lengths may be different from one another depending on the locations at which the insertion portions 26 are formed. For example, if the lengths of only the insertion portions 26 formed at both ends of the vertical bus protective cover 10 are made long, as long as attention is paid to the insertion portions 26 at both ends at the time of the insertion into the engagement portions 21, the other insertion portions 26 are guided by the insertion portions 26 at both ends, and thus the operation for the mounting is easily performed. Alternatively, if the sizes of only the insertion portions 26 formed at both ends are made large and all the facing engagement portions 21 have the same size, large clearances are present between the insertion portions 26 located not at both ends and the corresponding engagement portions 21. Thus, as long as attention is paid to the insertion portions 26 at both ends at the time of the insertion into the engagement portions 21, the operation for the mounting is easily performed.

The insertion portions 26 are formed on the upper side and the lower side of the vertical bus protective cover 10, and the vertical bus protective cover 10 is fixed using the insertion portions 26 on both sides. However, the present invention is not limited thereto, and a configuration in which the fixation is performed using the insertion portions 26 only on the upper side or the lower side, may be employed.

The vertical bus protective cover 10 in the present embodiment has no partition on the front-surface side. This is because, in a case of a general control center 1, a cover (not shown) for separation from the functional units 5 is disposed on the front surface of the vertical bus supporting device 11 so as to achieve a structure that does not allow any small animal or the like to enter the vertical bus supporting device 11 from the front surface thereof. However, a configuration in which a partition is disposed on the front-surface side, may be employed.

### Embodiment 2

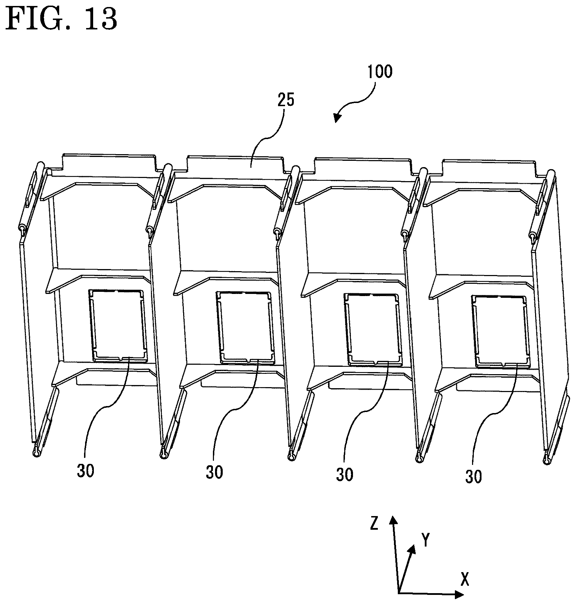

FIG. 13 shows a perspective view of a vertical bus protective cover 100 in embodiment 2 of the present invention. In embodiment 1, the plurality of vertical bus protective covers 10 have been used in which the connection-conductor connection openings 27 allowing the connection conductors 6 to penetrate therethrough are formed at different locations according to the locations of the connection conductors 6. In embodiment 2, at the time of the production of the vertical bus protective covers 100, the connection-conductor connection openings 27 are not formed but opening-forming slits 30 are formed, whereby the present invention can be implemented with one type of vertical bus protective cover 100. The other components are the same as those described in embodiment 1 and thus are designated by the same reference characters, and the description thereof is omitted.

As shown in FIG. 13, the opening-forming slits 30 are formed in a perforated manner along the outer peripheries of portions, of the rear-surface partition portion 25, at which connection-conductor connection openings are to be formed. Since four vertical buses 4 are disposed also in the present embodiment, four opening-forming slits 30 are formed in the rear-surface partition portion 25. Each of the perforated opening-forming slits 30 is formed such that a part of the rear-surface partition portion 25 can be easily cut out. When the part is cut out, the opening formed by cutting out the part serves as a connection-conductor connection opening. When the vertical bus protective covers 100 are mounted to the vertical buses 4 together with the vertical bus supporting tools 9, the connection-conductor connection openings can be easily formed according to the locations of the connection conductors 6. Accordingly, the one type of vertical bus protective cover 100 can be mounted for the connection conductors 6 at different locations.

As described above, each connection-conductor connection opening can be easily formed at a desired location by cutting out a part of the rear-surface partition portion 25 with use of the corresponding perforated opening-forming slit 30 formed in the rear-surface partition portion 25. Thus, the present invention can be practiced with the one type of vertical bus protective cover 100 regardless of the locations at which the connection conductors 6 are disposed. In addition, no time is required to look for a desired vertical bus protective cover from among the plurality of types of vertical bus protective covers which are different in the locations of the connection-conductor connection openings, whereby the time for assembling the vertical bus supporting device 11 can be shortened. In addition, since the number of the types of vertical bus protective covers can be reduced, management is easily performed. In addition, since there is no need to produce any molds having connection-conductor connection openings at different locations in order to produce the vertical bus protective covers, the cost for producing molds can be reduced.

### Embodiment 3

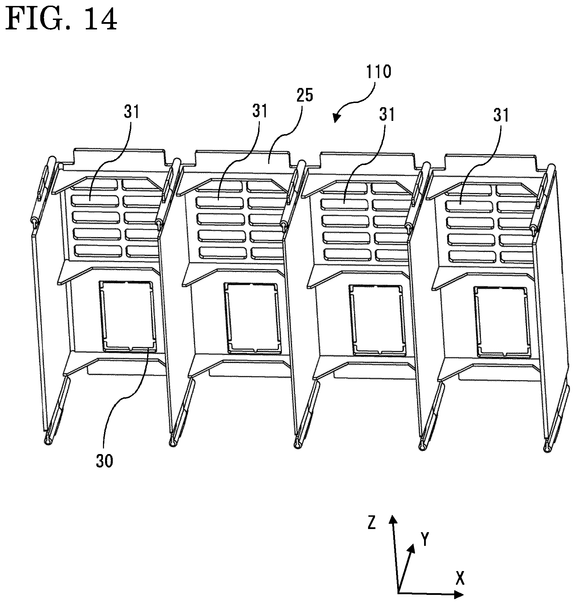

FIG. 14 shows a perspective view of a vertical bus protective cover 110 in embodiment 3 of the present invention. In embodiment 2, only the opening-forming slits 30 have been formed in the rear-surface partition portion 25. However, in embodiment 3, ventilation holes 31 are further formed in the rear-surface partition portion 25. The other components are the same as those described in embodiment 1 and thus are designated by the same reference characters, and the description thereof is omitted.

As shown in FIG. 14, the ventilation holes 31 are openings that are formed above the opening-forming slits 30 of the rear-surface partition portion 25. Here, ten ventilation holes 31 are formed above one opening-forming slit 30. However, the locations, the sizes, and the number of the ventilation holes 31 to be formed are not limited thereto. The ventilation holes 31 are openings for performing ventilation of air that is present around the vertical buses 4 enclosed by the vertical bus protective cover 110. When current at about 1000 A flows to the vertical buses 4 of the control center 1, the vertical buses 4 themselves generate heat. If the ventilation holes 31 are formed, accumulation of heat on the inner side of the vertical bus protective cover 110 is suppressed, whereby it is possible to suppress increases in the temperatures of the vertical buses 4 themselves. In addition, as for a member the function of which deteriorates owing to heat (for example, in general, the tensile strength of the unsaturated polyester resin used for the vertical bus support decreases owing to increase in the temperature), it is possible to suppress deterioration of the function of the member.

As described above, since the ventilation holes 31 are formed in the rear-surface partition portion 25, accumulation of heat on the inner side of the vertical bus protective cover is suppressed, whereby it is possible to suppress increases in the temperatures of the vertical buses and deterioration of the function of the member near the vertical buses.

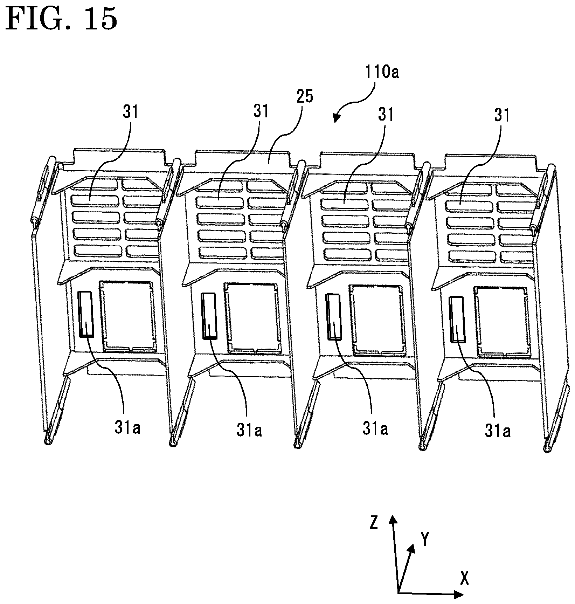

Although the ventilation holes 31 are formed only on the upper side of the rear-surface partition portion 25 in the present embodiment, the ventilation holes 31 may be formed also on the lower side of the rear-surface partition portion 25, as shown in FIG. 15. If ventilation holes 31a are formed also on the lower side, the efficiency of the ventilation is increased, whereby it is possible to further suppress increases in the temperatures of the vertical buses and deterioration of the function of the member near the vertical buses.

The configurations described above in embodiments 1 to 3 are examples of the configuration of the present invention, and it is needless to say that modifications, including combinations and partial deletions of the embodiments, can be made always within the scope of the claims. In addition, although the vertical bus supporting device is disposed in the control center which is a type of control gear in embodiments 1 to 3, the vertical bus supporting device may be disposed in another switchgear or switchboard.

### DESCRIPTION OF THE REFERENCE CHARACTERS

- 1: control center
- 2: housing
- 3: horizontal bus
- 4: vertical bus
- 5: functional unit
- 6: connection conductor
- 7: contactor
- 8: fixation portion
- 9: vertical bus supporting tool
- 10: vertical bus protective cover
- 11: vertical bus supporting device
- 12: horizontal bus supporting tool
- 13: horizontal bus supporting device
- 14: front-surface vertical bus support
- 15: rear-surface vertical bus support
- 16: front-surface vertical bus supporting metalmember
- 17: rear-surface vertical bus supporting metalmember
- 18: screw
- 19: vertical bus pressing portion
- 20: vertical bus insertion portion
- 21: engagement portion
- 22: screw penetration portion
- 23: inter-vertical bus insulation portion
- 24: vertical bus side-surface insulation portion
- 25: rear-surface partition portion
- 26: insertion portion
- 27: connection-conductor connection opening
- 28: bolt
- 29: press nut
- 30: opening-forming slit
- 31: ventilation hole
- 100: vertical bus protective cover
- 110: vertical bus protective cover

## Claims

1. A vertical bus supporting device (11) for a switchboard that includes, in a housing (2) thereof, a plurality of vertical buses (4), a plurality of horizontal buses (3), and a plurality of functional units (5) obtained by unitizing control devices, the vertical bus supporting device (11) comprising:
vertical bus supporting tools (9) each including
two vertical bus supports disposed so as to hold therebetween the plurality of vertical buses (4) from a front-surface side and a rear-surface side, respectively, and
vertical bus supporting metal members disposed so as to couple the two vertical bus supports from rear surfaces of the two respective vertical bus supports; and
vertical bus protective covers (10) made of an insulating material and mounted to the vertical bus supporting tools (9), each vertical bus protective cover (10) including partition walls configured to surround and insulate the plurality of vertical buses (4),
wherein the plurality of the vertical bus supporting tools (9) is configured to be located so as not to interfere with contactors (7), of the functional units (5), which are connected to the plurality of vertical buses (4), the vertical bus supporting tools (9) being arrangeable such that intervals are kept therebetween in a longitudinal direction of the plurality of vertical buses (4), and
wherein the vertical bus protective covers (10) are arranged between the respective vertical bus supporting tools (9) ;
wherein each vertical bus protective cover (10) is mounted to each of the two corresponding vertical bus supports by fitting insertion portions (26) and engagement portions (21) with each other,
wherein the insertion portions (26) are formed on the vertical bus protective cover (10),
wherein the engagement portions (21) are formed on each of the two vertical bus supports;
wherein an external shape of the insertion portions (26) is a cylindrical shape and each end portion thereof has a smooth hemispheric shape having no acute-angle portion, and wherein each engagement portion (21) has a smooth substantially circular shape having no acute-angle portion and tapered in the depth direction.

2. The vertical bus supporting device (11) according to claim 1, wherein the size of the vertical bus protective cover (10) in the longitudinal direction of the plurality of vertical buses (4) is such that the vertical bus protective cover (10) is located between the corresponding vertical bus supporting tools (9).

3. The vertical bus supporting device (11) according to claim 1 or 2, wherein
each vertical bus protective cover (100) includes a partition portion which is configured to insulate the corresponding horizontal bus (3) and which couples the partition walls, and
the partition portion has an opening-forming slit (30) for forming an opening into which a connection conductor for connecting the corresponding vertical bus (4) and the horizontal bus (3) to each other can be inserted.

4. The vertical bus supporting device (11) according to claim 3, wherein the partition portion has a ventilation hole (31).

5. The vertical bus supporting device (11) according to claim 4, wherein the ventilation hole (31) is formed in each of an upper side and a lower side of the partition portion.

6. A switchboard including a housing (2) comprising therein a plurality of vertical buses (4), a plurality of horizontal buses (3), a plurality of functional units (5) obtained by unitizing control devices and a vertical bus supporting device (11) according to any of claims 1 to 5.

## Patentansprüche

1. Vertikalsammelschienen-Unterstützungseinrichtung (11) für eine Schalttafel, die in einem Gehäuse (2) eine Vielzahl von Vertikalsammelschienen (4), eine Vielzahl von Horizontalsammelschienen (3) und eine Vielzahl von Funktionseinheiten (5) aufweist, die durch Vereinheitlichung von Steuerungseinrichtungen gebildet werden, wobei die Vertikalsammelschienen-Unterstützungseinrichtung (11) aufweist:
Vertikalsammelschienen-Haltevorrichtungen (9), die jeweils aufweisen
zwei Vertikalsammelschienen-Halter, die so angeordnet sind, dass sie die Vielzahl von Vertikalsammelschienen (4) jeweils von einer Vorderseite und einer Rückseite halten, und
Vertikalsammelschienen-Metallhalter, die so angeordnet sind, dass sie die beiden Vertikalsammelschienen-Halter von den Rückseiten der beiden jeweiligen Vertikalsammelschienen-Halter koppeln; und
Vertikalsammelschienen-Schutzabdeckungen (10), die aus einem Isoliermaterial bestehen und an den Vertikalsammelschienen-Haltevorrichtungen (9) montiert sind, wobei jede Vertikalsammelschienen-Schutzabdeckung (10) Trennwände enthält, die so konfiguriert sind, dass sie die Vielzahl von Vertikalsammelschienen (4) umgeben und isolieren,
wobei die Vielzahl der Vertikalsammelschienen-Haltevorrichtungen (9) so konfiguriert sind, dass sie die Kontaktoren (7) der Funktionseinheiten (5), die mit der Vielzahl von Vertikalsammelschienen (4) verbunden sind, nicht stören, und die Vertikalsammelschienen-Haltevorrichtungen (9) so angeordnet werden können, dass Abstände in Längsrichtung der Vielzahl von Vertikalsammelschienen (4) eingehalten werden, und
wobei die Vertikalsammelschienen-Schutzabdeckungen (10) zwischen den jeweiligen Vertikalsammelschienen-Haltevorrichtungen (9) angeordnet sind;
wobei jede Vertikalsammelschienen-Schutzabdeckung (10) an jedem der beiden entsprechenden Vertikalsammelschienen-Halter montiert ist, indem Einführabschnitte (26) und Eingriffabschnitte (21) miteinander verbunden werden,
wobei die Einführabschnitte (26) an der Vertikalsammelschienen-Schutzabdeckung (10) ausgebildet sind,
wobei die Eingriffabschnitte (21) an jedem der beiden Vertikalsammelschienen-Halter ausgebildet sind;
wobei eine äußere Form der Einführabschnitte (26) eine zylindrische Form ist und jedes Endstück eine glatte, halbkugelförmige Form ohne scharfe Winkel aufweist, und wobei jedes Eingriffabschnitt (21) eine glatte, im Wesentlichen kreisförmige Form aufweist.

2. Vertikalsammelschienen-Unterstützungseinrichtung (11) nach Anspruch 1, **dadurch gekennzeichnet, dass** die Größe der Vertikalsammelschienen-Schutzabdeckung (10) in Längsrichtung der Vielzahl von Vertikalsammelschienen (4) derart ist, dass die Vertikalsammelschienen-Schutzabdeckung (10) zwischen den entsprechenden Vertikalsammelschienen-Haltevorrichtungen (9) angeordnet ist.

3. Vertikalsammelschienen-Unterstützungseinrichtung (11) nach Anspruch 1 oder 2, **dadurch gekennzeichnet, dass** jede Vertikalsammelschienen-Schutzabdeckung (100) einen Trennabschnitt enthält, der so konfiguriert ist, dass er die entsprechende Horizontalsammelschiene (3) isoliert und die Trennwände koppelt, und der Trennabschnitt einen schlitzförmigen Ausschnitt (30) zur Bildung einer Öffnung aufweist, in die ein Verbindungsleiter zum Verbinden der entsprechenden Vertikalsammelschiene (4) mit der Horizontalsammelschiene (3) eingeführt werden kann.

4. Vertikalsammelschienen-Unterstützungseinrichtung (11) nach Anspruch 3, **dadurch gekennzeichnet, dass** der Trennabschnitt ein Belüftungsloch (31) aufweist.

5. Vertikalsammelschienen-Unterstützungseinrichtung (11) nach Anspruch 4, **dadurch gekennzeichnet, dass** das Belüftungsloch (31) sowohl an einer oberen als auch an einer unteren Seite des Trennabschnitts ausgebildet ist.

6. Schalttafel mit einem Gehäuse (2), das eine Vielzahl von Vertikalsammelschienen (4), eine Vielzahl von Horizontalsammelschienen (3), eine Vielzahl von Funktionseinheiten (5), die durch Vereinheitlichung von Steuerungseinrichtungen gebildet werden, und eine Vertikalsammelschienen-Unterstützungseinrichtung (11) nach einem der Ansprüche 1 bis 5 aufweist.

## Revendications

1. Dispositif de support de bus vertical (11) pour un tableau électrique qui comporte, dans un boîtier (2) associé, une pluralité de bus verticaux (4), une pluralité de bus horizontaux (3) et une pluralité d'unités fonctionnelles (5) obtenues par l'unitisation de dispositifs de commande, le dispositif de support de bus vertical (11) comprenant :
des outils de support de bus vertical (9) comportant chacun deux supports de bus vertical disposés de manière à maintenir entre eux la pluralité de bus verticaux (4) à partir d'un côté de la surface avant et d'un côté de la surface arrière, respectivement, et
des éléments métalliques de support de bus vertical, disposés de manière à accoupler les deux supports de bus vertical à partir des surfaces arrière des deux supports de bus vertical respectifs ; et
des couvercles de protection de bus vertical (10) constitués d'un matériau isolant et montés sur les outils de support de bus vertical (9), chaque couvercle de protection de bus vertical (10) comportant des parois de séparation conçues pour entourer et isoler la pluralité de bus verticaux (4),
dans lequel la pluralité d'outils de support de bus vertical (9) est conçue pour être située de manière à ne pas interférer avec des contacteurs (7) des unités fonctionnelles (5), qui sont connectés à la pluralité de bus verticaux (4), les outils de support de bus vertical (9) pouvant être agencés de manière à maintenir entre eux des intervalles dans une direction longitudinale de la pluralité de bus verticaux (4), et
dans lequel les couvercles de protection de bus vertical (10) sont agencés entre les outils de support de bus vertical (9) respectifs ;
dans lequel chaque couvercle de protection de bus vertical (10) est monté sur chacun des deux supports de bus vertical correspondants en ajustant des parties d'insertion (26) et des parties de mise en prise (21) l'une avec l'autre,
dans lequel les parties d'insertion (26) sont formées sur le couvercle de protection de bus vertical (10),
dans lequel les parties de mise en prise (21) sont formées sur chacun des deux supports de bus vertical ;
dans lequel la forme externe des parties d'insertion (26) est cylindrique et chaque partie terminale associée a une forme hémisphérique lisse sans partie à angle aigu, et dans lequel chaque partie de mise en prise (21) a une forme lisse sensiblement circulaire sans partie à angle aigu et effilée dans le sens de la profondeur.

2. Dispositif de support de bus vertical (11) selon la revendication 1, dans lequel la taille du couvercle de protection de bus vertical (10) dans la direction longitudinale de la pluralité de bus verticaux (4) est telle que le couvercle de protection de bus vertical (10) est situé entre les outils de support de bus vertical (9) correspondants.

3. Dispositif de support de bus vertical (11) selon la revendication 1 ou 2, dans lequel
chaque couvercle de protection de bus vertical (100) comporte une partie de séparation qui est conçue pour isoler le bus horizontal (3) correspondant et qui relie les parois de séparation, et
la partie de séparation a une fente formant une ouverture (30) destinée à former une ouverture dans laquelle peut être inséré un conducteur de connexion destiné à connecter le bus vertical (4) correspondant et le bus horizontal (3) l'un à l'autre.

4. Dispositif de support de bus vertical (11) selon la revendication 3, dans lequel la partie de séparation a un trou d'aération (31).

5. Dispositif de support de bus vertical (11) selon la revendication 4, dans lequel le trou d'aération (31) est formé dans chacun des côtés supérieur et inférieur de la partie de séparation.

6. Tableau électrique comportant un boîtier (2) comprenant en son intérieur une pluralité de bus verticaux (4), une pluralité de bus horizontaux (3), une pluralité d'unités fonctionnelles (5) obtenues par l'unitisation de dispositifs de commande et d'un dispositif de support de bus vertical (11) selon l'une quelconque des revendications 1 à 5.
